# EUROPÄISCHE PATENTANMELDUNG

(11) **EP 4 272 549 A1**
(43) Veröffentlichungstag der Anmeldung: **08.11.2023**
(21) Anmeldenummer: 23171009.6
(22) Anmeldetag: 02.05.2023
(51) Int. Cl.: A01K 1/02

(54) **ABFERKELBUCHT FÜR EINE GRUPPENABFERKELBUCHT SOWIE BETREFFENDE GRUPPENABFERKELBUCHT**

(30) Priorität: 06.05.2022 LU 502037
(71) Anmelder: Big Dutchman International GmbH, 49377 Vechta (DE)
(72) Erfinder: Appel, Andre, 26169 Friesoythe (DE); Behrens, Daniel, 27777 Ganderkese (DE); Gaeckle, Stefan, 27239 Twistringen (DE); Hinrichs, Birgit, 49377 Vechta (DE)
(74) Vertreter: Eisenführ Speiser

(57) **Zusammenfassung**

Die Erfindung betrifft eine Abferkelbucht (4) für eine Gruppenabferkelbucht mit einer in der Abferkelbucht angeordneten Ferkelschutzeinrichtung (8), wobei die Ferkelschutzeinrichtung (8) ein erstes Seitenteil (10) umfasst, ein zweites Seitenteil (12), welches im Wesentlichen parallel zu dem ersten Seitenteil (10) angeordnet und von diesem derart beabstandet ist, dass das erste und das zweite Seitenteil (10, 12) einen Aufnahmeraum (14) für eine Sau seitlich begrenzen, ein in eine geschlossene Stellung und in eine offene Stellung bewegbares rückseitiges Türelement (16, 22), welches in der geschlossenen Stellung den Aufnahmeraum (14) rückseitig begrenzt und in der offenen Stellung einen rückseitigen Zugang zu dem Aufnahmeraum (14) freigibt.

Erfindungsgemäß wird vorgeschlagen die Abferkelbucht (4) dazu eingerichtet ist, dass die Sau den Aufnahmeraum (14) der Ferkelschutzeinrichtung (8) selbsttätig betreten und/oder verlassen kann, wobei das rückseitige Türelement (16, 22) durch die Sau in die geschlossene Stellung überführt wird, wenn die Sau die Ferkelschutzeinrichtung (8) betreten hat.

## Beschreibung

Die Erfindung betrifft eine Abferkelbucht für eine Gruppenabferkelbucht mit einer in der Abferkelbucht angeordneten Ferkelschutzeinrichtung, wobei die Ferkelschutzeinrichtung ein erstes Seitenteil umfasst, ein zweites Seitenteil, welches im Wesentlichen parallel zu dem ersten Seitenteil angeordnet und von diesem derart beabstandet ist, dass das erste und das zweite Seitenteil einen Aufnahmeraum für eine Sau seitlich begrenzen, und ein in eine geschlossene Stellung und in eine offene Stellung bewegbares rückseitiges Türelement, welches in der geschlossenen Stellung den Aufnahmeraum rückseitig begrenzt und in der offenen Stellung einen rückseitigen Zugang zu dem Aufnahmeraum freigibt.

Derartige Abferkelbuchten, auch als Wurfbox bezeichnet, mit einer Ferkelschutzeinrichtung sind aus dem Stand der Technik bekannt. Ferkelschutzeinrichtungen werden insbesondere im Rahmen der Schweinezucht dazu verwendet, das Muttertier, auch als Sau bezeichnet, während des Geburtsvorgangs zu stützen. Der Geburtsvorgang wird beim Schwein auch als Abferkeln bezeichnet. Darüber hinaus erfüllen Ferkelschutzeinrichtungen den Zweck, die neugeborenen Ferkel vor mechanischer Einwirkung, insbesondere einem Einklemmen, durch die Sau zu schützen.

Aus dem Stand der Technik sind Abferkelbuchten bekannt, welche einen durch Seitenteile und weitere Anbauteile ausgebildeten Ferkelschutzkorb aufweisen, der einen Aufnahmeraum für die Sau definiert und der über ein zumeist rückseitig angeordnetes Türelement zugänglich ist. Derartige Ferkelschutzeinrichtungen sind beispielsweise aus DE 20 2021 002 592 U1 sowie DE 20 2016 006 889 U1 oder auch EP 2 698 059 B1 bekannt. Bei solchen bekannten Abferkelbuchten wird das rückseitige Türelement der Ferkelschutzeinrichtung von einem Bediener manuell geschlossen bzw. geöffnet. Darüber hinaus sind traditionelle Deck-Wartebuchten mit Selbstfangfunktion bekannt, beispielsweise die LD-Box des Herstellers ACO FUNKI.

Wenngleich sich der zitierte Stand der Technik grundlegend bewährt hat, besteht dennoch Raum für Verbesserungen. Insbesondere hat sich beim Einsatz von Abferkelbuchten mit Ferkelschutzeinrichtungen in Zusammenschau mit Gruppenabferkelbuchten gezeigt, dass für den Fall, dass eine Sau in die Ferkelschutzeinrichtung bzw. Abferkelbucht über die geöffnete Hintertür eintritt, weitere Sauen, die sich in einem Bewegungsraum der Gruppenabferkelbucht befinden, gelegentlich ein neugieriges oder territoriales Verhalten dergestalt zeigen, dass sie in Kontakt bzw. Interaktion mit der in die Ferkelschutzeinrichtung eingetretenen Sau treten, was unerwünschten Stress und Unruhe für die in die Ferkelschutzeinrichtung eingetretene Sau bedeuten kann. Um dieses zu vermeiden ist bekannt, Türelemente manuell zu öffnen oder zu schließen, was sich jedoch aufwändig gestaltet.

Darüber hinaus sind auch selbstfangende Systeme bekannt, bei denen die Tür nach dem Eintreten der Sau verriegelt wird. Nachteilig hierbei wirkt sich jedoch aus, dass ein nur temporäres Eintreten in die Ferkelschutzeinrichtung für die Sau nicht möglich ist, da nach dem Eintreten die Tür verriegelt wird. Hat sich die Sau mit anderen Worten in die Ferkelschutzeinrichtung bewegt, so kann sie aus eigener Kraft nicht mehr aus dieser Austreten.

Vor diesem Hintergrund lag der Erfindung die Aufgabe zugrunde, eine Abferkelbucht der eingangs genannten Art dahingehend weiterzubilden, dass die im Stand der Technik vorgefundenen Nachteile möglichst weitgehend behoben werden. Insbesondere war eine Abferkelbucht anzugeben, die der Sau einen ungestörten und selbstbestimmten Aufenthalt innerhalb der Abferkelbucht bzw. Ferkelschutzeinrichtung ermöglicht, wobei auf manuelle Bedienungstätigkeiten durch Personal weitestgehend verzichtet werden soll.

Erfindungsgemäß wird die Aufgabe bei einer Abferkelbucht der eingangs genannten Art dadurch gelöst, dass die Abferkelbucht dazu eingerichtet ist, dass die Sau den Aufnahmeraum der Ferkelschutzeinrichtung selbsttätig betreten und/oder verlassen kann, wobei das rückseitige Türelement durch die Sau in die geschlossene Stellung überführt wird, wenn die Sau die Ferkelschutzeinrichtung betreten hat.

Auf diese Weise werden durch das geschlossenene rückseitige Türelement weitere, sich im Bereich eines Bewegungsraumes der Gruppenabferkelbucht aufhaltende Tiere daran gehindert, die sich in der Ferkelschutzeinrichtung befindliche Sau in Bedrängnis zu bringen bzw. zu stören. Gleichzeitig kann die Sau, für den Fall, dass das rückseitige Türelement nicht verriegelt ist, die Ferkelschutzeinrichtung nach Belieben verlassen.

Durch die erfindungsgemäße Anordnung wird weiterhin der Vorteil realisiert, dass der Arbeitsschutz des Bedienpersonals verbessert wird und gleichzeitig weniger manuelle Tätigkeiten erforderlich sind, weil eine Fixierung der Sau nicht länger manuell vorzunehmen ist. Die Sau kann in der Ferkelschutzeinrichtung darüber hinaus ungestört abferkeln und säugen, wobei die Ferkelschutzeinrichtung in an sich bekannter Weise als Schutzbarriere gegen ungewolltes mechanisches Einwirkung auf die Ferkel durch die Sau dient.

Die Erfindung wird dadurch weitergebildet, dass sich das rückseitige Türelement in der offenen Stellung in Richtung eines benachbart zu der Ferkelschutzeinrichtung angeordneten Bewegungsraums erstreckt, wobei benachbart zur offenen Stellung des rückseitigen Türelements eine Schutzvorrichtung, insbesondere ein Schutzbügel, angeordnet ist. Diese Schutzvorrichtung bzw. der Schutzbügel verhindern, dass das rückseitige Türelement im geöffneten Zustand durch Sauen im Bewegungsbereich ungewollt zugedrückt wird. Darüber hinaus stellt die Schutzvorrichtung einen mechanischen Schutz für sich im Bewegungsraum befindliche Ferkel bereit.

Vorzugsweise umfasst die Ferkelschutzeinrichtung ferner eine Verriegelungseinrichtung, welche in eine Bewegungsstellung und in eine Fangstellung bringbar ist, wobei die Verriegelungseinrichtung das rückseitige Türelement in der Fangstellung nach dem Eintreten einer Sau in den Aufnahmeraum verriegelt, und das rückseitige Türelement in der Bewegungsstellung durch die im Aufnahmeraum befindliche Sau geöffnet werden kann. Auf diese Weise wird sowohl ermöglicht, dass sich die Sau frei in die Ferkelschutzeinrichtung hinein und aus dieser heraus bewegen kann, wenn sich die Verriegelungseinrichtung in der Bewegungsstellung befindet oder aber die Sau nach dem Eintreten in die Ferkelschutzeinrichtung durch Blockierung der rückseitigen Türelemente in der Ferkelschutzeinrichtung gehalten wird. Hierdurch wird erreicht, dass die Ferkelschutzeinrichtung für eine Vielzahl von Szenarien eingesetzt werden kann und der Aufwand durch Bedienpersonal reduziert wird. Mit anderen Worten kann der Sau sowohl eine freie Beweglichkeit eingeräumt werden als auch ohne manuellen Eingriff erreicht werden, dass sich die Sau gewissermaßen selbst in der Ferkelschutzeinrichtung fängt, wenn dies gewünscht ist.

Gemäß einer bevorzugten Ausführungsform weist die Abferkelbucht benachbart zu wenigstens einem Seitenteil der Ferkelschutzeinrichtung, insbesondere zu beiden Seitenteilen der Ferkelschutzeinrichtung, einen Ferkel-Bewegungsraum auf, der insbesondere nach Art eines Ferkelnestes ausgebildet ist. Eine solche Abferkelbucht wird auch als Wurfbox bezeichnet. Der Ferkel-Bewegungsraum dient als Rückzugsraum für die Ferkel. Hierdurch wird sichergestellt, dass während der Geburtsphase der Ferkel-Bewegungsraum bzw. das Ferkelnest benachbart zu der Sau angeordnet ist, sodass die Sau unmittelbar Kontakt zu den Ferkeln aufnehmen kann. Im Übrigen haben auch die Ferkel um den Geburtszeitraum herum und in den Tagen, in denen die Sau in der Ferkelschutzeinrichtung fixiert ist, kurze Wege zwischen dem Gesäuge der Sau und dem Ferkelnest, was sich als gesundheitsfördernd erwiesen hat.

Auch wird durch die unmittelbar benachbarte Anordnung des Ferkel-Bewegungsraums bzw. Ferkelnests zu der Ferkelschutzeinrichtung, in welcher sich die Sau befindet, erreicht, dass unmittelbarer Körperkontakte zur Sau hergestellt werden kann, und im Übrigen vermieden wird, dass sich Ferkel verlaufen oder auskühlen. Das Ferkelnest wird von Verschmutzungen durch die Sau freigehalten, da diese, wenn sie in der Ferkelschutzeinrichtung fixiert ist, keine Möglichkeit hat, Exkremente in den Bereich des oder der Ferkelnester abzugeben. Für das Bedienpersonal ergibt sich der Vorteil, dass Ferkelbehandlungen erleichtert werden, wenn die Sau in der Ferkelschutzeinrichtung fixiert ist und sich die Ferkel in den Ferkel-Bewegungsräumen befinden. Ferkel können aufgrund des begrenzten Bewegungsbereiches leicht gefangen und ergriffen werden.

Vorzugsweise ist im Bereich des Aufnahmeraums ein Betätigungselement angeordnet, welches dazu eingerichtet ist, von einer in den Aufnahmeraum eintreten Sau aus einer geschlossenen Stellung in eine offene Stellung gebracht zu werden, wobei das Betätigungselement mittels einer Kopplungseinrichtung derart mit dem rückseitigen Türelement gekoppelt ist, dass eine Bewegung des Betätigungselements eine Bewegung des rückseitigen Türelements bewirkt und umgekehrt, wobei die Kopplung derart ausgebildet ist, dass die offene Stellung des rückseitigen Türelements mit der geschlossenen Türstellung des Betätigungselements korrespondiert und die geschlossene Stellung des rückseitigen Türelements mit der offenen Stellung des Betätigungselements korrespondiert. Durch die Kopplung des rückseitigen Türelements mittels einer Kopplungseinrichtung mit einem Betätigungselement, welches gewissermaßen von einer in die Ferkelschutzeinrichtung eintretenden Sau bedient wird, wird nach dem Eintreten der Sau in die Ferkelschutzeinrichtung und die damit einhergehende Betätigung des Betätigungselements das rückseitige Türelement geschlossen wird.

Durch das Aufdrücken des rückseitigen Türelements durch die Sau wird gleichzeitig das Betätigungselement wieder in eine geschlossene Stellung gebracht wird, sodass beim Wiedereintreten einer Sau in die Ferkelschutzeinrichtung erneut ein Schließen des rückseitigen Türelements erfolgen kann. Dies bietet für das Bedienpersonal der Vorteil, dass ein manuelles Schließen und Öffnen von Türen entfällt. Der Begriff "offene Stellung" meint hierbei, dass sich ein Betätigungs- bzw. Türelement der Sau im Bereich des Aufnahmeraumes nicht in den Weg stellt. Der Begriff "geschlossene Stellung" meint, dass das Betätigungs- bzw. Türelement sich der Sau im Bereich des Aufnahmeraums in den Weg stellt und ggf. von dieser betätigt werden kann.

Die Erfindung wird dadurch weitergebildet, dass das rückseitige Türelement ein erstes rückseitiges Türelement ist und wobei die Ferkelschutzeinrichtung ein zweites rückseitiges Türelement aufweist, welches benachbart zu dem ersten rückseitigen Türelement angeordnet ist und in eine geschlossene Stellung und in eine offene Stellung bewegbar ist, wobei das erste und das zweite rückseitige Türelement in der geschlossenen Stellung den Aufnahmeraum gemeinsam rückseitig begrenzen und in der offenen Stellung den rückseitigen Zugang zu dem Aufnahmeraum freigeben, wobei das Betätigungselement ein erstes Betätigungselement ist und die Ferkelschutzeinrichtung ein im Bereich des Aufnahmeraums angeordnetes zweites Betätigungselement aufweist, welches ebenfalls dazu eingerichtet ist, von einer in den Aufnahmeraum eintretenden Sau aus einer geschlossenen Stellung in eine offene Stellung gebracht zu werden, wobei das zweite Betätigungselement mittels einer zweiten Kopplungseinrichtung derart mit dem zweiten rückseitigen Türelement gekoppelt ist, dass eine Bewegung des zweiten Betätigungselements eine Bewegung des zweiten rückseitigen Türelements bewirkt und umgekehrt, wobei die Kopplung derart ausgebildet ist, dass die offene Stellung des zweiten rückseitigen Türelements mit einer geschlossenen Stellung des zweiten Betätigungselements korrespondiert und die geschlossene Stellung des zweiten rückseitigen Türelements mit der offenen Stellung des zweiten Betätigungselements korrespondiert. Durch die Verwendung von zwei Betätigungselementen sowie zwei rückseitigen Türelementen wird erreicht, dass der Bewegungs- bzw. Schwenkbereich der Türelemente und Betätigungselemente kleiner ausfällt im Vergleich zu Lösungen mit nur einem Türelement. Auf diese Weise kann der Installationsraum der Ferkelschutzeinrichtung reduziert werden und im Übrigen können die zur Betätigung der Türelemente erforderlichen Kräfte, die durch die ein- bzw. austretende Sau aufzubringen sind, reduziert werden.

Gemäß einer bevorzugten Ausführungsform ist das zweite Betätigungselement benachbart zu dem ersten Betätigungselement angeordnet. Hierdurch wird sichergestellt, dass sowohl die Betätigungselemente als auch die rückseitigen Türelemente im Wesentlichen gleichförmig und gleichzeitig betätigt werden, wenn die Sau mit den Betätigungselementen in Kontakt tritt.

Gemäß einer bevorzugten Ausführungsform ist das erste Betätigungselement als erstes Betätigungs-Türelement ausgebildet, welches in der offenen Stellung im Wesentlichen parallel zu dem ersten Seitenteil verläuft und in einer geschlossenen Stellung insbesondere im Wesentlichen rechtwinklig zu dem ersten Seitenteil in den Aufnahmeraum hineinragt und/oder wobei das zweite Betätigungselement als zweites Betätigungs-Türelement ausgebildet ist, welches in der offenen Stellung im Wesentlichen parallel zu dem zweiten Seitenteil verläuft und in einer geschlossenen Stellung insbesondere im Wesentlichen rechtwinklig zu dem zweiten Seitenteil in den Aufnahmeraum hineinragt. Auf diese Weise wird erreicht, dass die Betätigungselemente, welche als Betätigungs-Türelemente ausgebildet sind, auf einfache Weise durch die Sau, beispielsweise durch deren Schulterbereich, betätigt werden können. Darüber hinaus verlaufen die Betätigungs-Türelemente nach dem Eintreten der Sau unter Betätigung derselben im Wesentlichen parallel zu den Seitenteilen, sodass diese sich weder für die Sau selbst noch für Ferkel und Bedienpersonal störend auswirken.

Die Erfindung wird ferner dadurch weitergebildet, dass die erste Kopplungseinrichtung und/oder die zweite Kopplungseinrichtung ein Verbindungselement aufweist, welches das Betätigungs-Türelement mit dem rückseitigen Türelement verbindet. Das Verbindungselement kann beispielsweise als Stange ausgebildet sein, welche mit den jeweiligen Türelementen verbunden ist. Vorzugsweise ist an dem jeweiligen Türelement ein Ausleger angebracht, mit welchem das Verbindungselement drehbar verbunden ist. Vorzugsweise sind die Türelemente benachbart zu den Seitenteilen angeordnet oder alternativ unmittelbar mit diesen über Gelenke verbunden.

Die Abferkelbucht wird dadurch weitergebildet, dass diese eine, insbesondere rechteckige, Einfassung aufweist, welche durch das wenigstens eine rückseitige Türelement der Ferkelschutzeinrichtung unterbrochen ist, und wobei ein Zugang zu der Abferkelbucht über das wenigstens eine rückseitige Türelement der Ferkelschutzeinrichtung bereitgestellt oder versperrt wird. Auf diese Weise kann über das eine oder die zwei rückseitigen Türelemente nicht nur die Sau die Ferkelschutzeinrichtung und damit die Abferkelbucht verlassen, sondern bei geöffneten Türelementen auch die sich in der Abferkelbucht befindlichen Ferkel.

Gemäß einer alternativ bevorzugten Ausführungsform ist hinter der Ferkelschutzeinrichtung ein hinterer Ferkel-Bewegungsraum ausgebildet, wobei Unterseiten der rückseitigen Türelemente von einem Boden der Abferkelbucht derart beabstandet sind, dass die Sau sicher in der Ferkelschutzeinrichtung gehalten wird und Ferkel unterhalb der rückseitigen Türelemente in den hinteren Ferkel-Bewegungsraum wechseln können. Dieser alternativ bevorzugten Ausführungsform liegt die Erkenntnis zugrunde, dass in der Praxis gelegentlich beobachtet wurde, dass Ferkel innerhalb der Ferkelschutzeinrichtung zwischen der Sau und den rückseitigen Türelementen bedrängt werden. Durch das Vorsehen eines hinteren Ferkel-Bewegungsraumes, in den die Ferkel aufgrund der Beabstandung der rückseitigen Türelemente zum Boden jederzeit wechseln können, wird dies zuverlässig verhindert.

Die Erfindung wird dadurch weitergebildet, dass sich die rückseitigen Türelemente in der offenen Stellung in den hinteren Ferkel-Bewegungsraum erstrecken. Hierdurch wird vermieden, dass Sauen, die sich in dem Bewegungsraum aufhalten, die rückseitigen Türelemente versehentlich zustoßen. Damit kann auch auf die Verwendung von in den Bewegungsraum ragenden Schutzvorrichtungen, beispielsweise von Schutzbügeln, verzichtet werden. Vorzugsweise ist der hintere Ferkel-Bewegungsraum mit dem ersten Ferkel-Bewegungsraum und dem zweiten Ferkel-Bewegungsraum derart verbunden, dass Ferkel aus dem hinteren Ferkel-Bewegungsraum in die ersten und zweiten Ferkel-Bewegungsräume und umgekehrt wechseln können. Auf diese Weise können sich die Ferkel von wenigstens drei Seiten um die Sau bewegen.

Gemäß einer bevorzugten Ausführungsform sind die Unterseiten der rückseitigen Türelemente vom Boden der Abferkelbucht in einer Vertikalrichtung 15 cm bis 20 cm beabstandet. Ein derartiger Abstandsbereich hat sich als besonders geeignet erwiesen, um sicherzustellen, dass die Sau sicher in der Ferkelschutzeinrichtung gehalten wird und gleichzeitig Ferkel unterhalb der rückseitigen Türelemente in den hinteren Ferkel-Bewegungsraum wechseln können.

Gemäß einer bevorzugten Ausführungsform ist zwischen dem hinteren Ferkel-Bewegungsraum und einem an die Abferkelbucht angrenzenden Bewegungsraum ein Trennelement angeordnet, welches so dimensioniert ist, dass die Sau das Trennelement übersteigen kann und die Ferkel innerhalb der Abferkelbucht gehalten werden. Das Trennelement hat vorzugsweise eine Höhe von 15 bis 20 cm. Auf diese Weise werden die Ferkel daran gehindert, die Abferkelbucht in Richtung eines Bewegungsraumes zu verlassen, gleichzeitig wird des den Sauen jedoch ermöglicht, das Trennelement zu übersteigen.

Das Trennelement weist vorzugsweise eine Höhe von 15 bis 20 cm auf. Das Trennelement ist vorzugsweise an seiner Oberseite abgerundet ausgebildet, wobei insbesondere ein Rohr oberseitig an dem Trennelement angeordnet ist. Auf diese Weise wird das Verletzungsrisiko für die Sauen minimiert. Das Trennelement ist in einer Vertikalführung austauschbar aufgenommen. Auf diese Weise ist es beispielsweise auch möglich, ein Trennelement mit einer größeren Höhe für eine einzelne Abferkelbucht vorzusehen, wenn sich beispielsweise Sauen im Bewegungsraum befinden, sodass für eine einzelne Abferkelbucht vermieden werden kann, dass Sauen in den Bereich des hinteren Ferkel-Bewegungsraumes treten.

Die Erfindung wird dadurch weitergebildet, dass in der Einfassung der Abferkelbucht benachbart zu dem Bewegungsraum ein Türelement, insbesondere ein Ferkelschlupf, angeordnet ist, welcher in einem geöffneten Zustand einen Übergang der Ferkel aus der Abferkelbucht in einen benachbarten Bewegungsraum ermöglicht. Auf diese Weise kann den Ferkeln auf einfache Weise ein Zugang aus der Abferkelbucht zu dem Bewegungsraum bereitgestellt werden.

Gemäß einer bevorzugten Ausführungsform sind das erste und das zweite Seitenteil ortsfest angeordnet insbesondere nach Art eines Ferkelschutzkorbes. Gemäß einer alternativ bevorzugten Ausführungsform weist die Ferkelschutzeinrichtung an einer den rückseitigen Türelementen gegenüberliegenden Stirnseite eine Trogkonsole auf, wobei die Betätigungs-Türelemente benachbart zu der Trogkonsole derart angeordnet sind, dass eine Sau die Betätigungs-Türelemente, insbesondere mit einem Schulterbereich, in die offene Stellung bewegt, wenn sich die Sau der Trogkonsole annähert. Vorzugsweise sind das erste Seitenteil und/oder das zweite Seitenteil als gitterförmiges Seitenteil ausgebildet. Darüber hinaus ist bevorzugt, dass das erste und/oder das zweite Seitenteil einen Ferkelabweiser aufweist.

Gemäß einer bevorzugten Weiterbildung ist einem ersten Ferkel-Bewegungsraum ein erstes Heizmittel zugeordnet und einem zweiten Ferkel-Bewegungsraum ein zweites Heizmittel, wobei die Heizmittel derart ausgebildet und eingerichtet sind, dass diese die Ferkel-Bewegungsräume auf unterschiedliche Temperatur erwärmen. Mit anderen Worten können beispielsweise durch eine Bodenheizung, Abdeckungen und Lampen zwei unterschiedliche Klimazonen rechts und links der Sau geschaffen werden, sodass die Ferkel ihre jeweilige Wohlfühlzone wählen können.

In einem weiteren Aspekt betrifft die Erfindung eine Gruppenabferkelbucht mit wenigstens zwei benachbart zueinander angeordneten Abferkelbuchten und einem benachbart zu den Abferkelbuchten angeordneten Bewegungsraum. Die Erfindung löst die eingangs bezeichnete Aufgabe in Bezug auf die Gruppenabferkelbucht, indem wenigstens eine der Abferkelbuchten, insbesondere sämtliche der Abferkelbuchten, nach einem der vorstehenden Ausführungsbeispiele ausgebildet sind. Die Gruppenabferkelbucht macht sich die gleichen Vorteile und bevorzugten Ausführungsformen zunutze wie die erfindungsgemäße Ferkelschutzeinrichtung und die erfindungsgemäße Abferkelbucht. Diesbezüglich wird auf die obigen Ausführungen verwiesen und deren Inhalt hier mit einbezogen.

Durch die erfindungsgemäße Konfiguration der Gruppenabferkelbucht werden eine Reihe von weiteren Vorteilen erzielt. Wenn sich beispielsweise eine Sau und Ferkel in einer Abferkelbucht befinden und durch Freigeben des rückseitigen Türelements eine sogenannte Bewegungsphase freigegeben wird, dann können die jeweiligen Sauen und Ferkel den gemeinsamen Bewegungsraum nutzen. Insoweit können die Sauen in dem Bewegungsraum mehrere Schritte in eine Richtung gehen, wobei insgesamt der Bewegungsradius im Vergleich zu aus dem Stand der Technik vorbekannten Lösungen deutlich vergrößert wird. Auch können sich die Sauen entsprechend drehen und sich weit von häufig in den Abferkelbuchten angeordneten Wärmequellen entfernen, sodass das Komfortempfinden der Tiere gesteigert werden kann.

Vor dem eigentlichen Gebärvorgang ist es darüber hinaus möglich, dass sich mehrere Sauen im Bereich des Bewegungsraumes kennenlernen. Sie müssen dann nach dem Abferkeln keine oder weniger Rangkämpfe ausführen, wenn sich zusätzlich auch Ferkel in dem Bewegungsraum befinden. Darüber hinaus wird den Sauen Transportstress durch den bei aus dem Stand der Technik vorbekannten Vorrichtungen erforderlichen Transport einige Tage nach dem Abferkeln erspart. Für das Personal entfallen Umtreibevorgänge, die häufig bei aus dem Stand der Technik vorbekannten Vorrichtungen erforderlich sind, um den Sauen ein soziales Verhalten zu ermöglichen. Im Übrigen kann während der Geburtsphase oder der Behandlungsphase der Bewegungsraum gleichzeitig als Kontrollgang fungieren. Somit wird der Bewegungsraum doppelt genutzt. Darüber hinaus ergibt sich der Vorteil, dass für den Fall, dass Ausläufe an der Gruppenabferkelbucht geplant werden, nur ein Zugang nach außen notwendig ist, der von Sauen aus einer Vielzahl von Abferkelbuchten verwendet werden kann. Auch weit von einer Stall-Außenwand befindliche Abferkelbuchten können somit an einen einzigen Auslauf angebunden werden.

Die Erfindung wird dadurch weitergebildet, dass mehrere, insbesondere sämtliche der Abferkelbuchten die Verriegelungseinrichtungen nach dem obenstehenden Ausführungsbeispiel aufweisen, wobei die Verriegelungseinrichtungen über ein gemeinsames Betätigungsmittel betätigbar sind. Somit können mehrere Ferkelschutzeinrichtungen gemeinsam in den Bewegungs- oder Fangmodus gestellt werden. Es müssen, im Gegensatz zu aus dem Stand der Technik vorbekannten Systemen, keine Türen oder Seitenteile jeder einzelnen Bucht betätigt werden.

Die Erfindung wird nachfolgend anhand bevorzugter Ausführungsbeispiele unter Bezugnahme auf die beigefügten Figuren näher beschrieben.

Hierbei zeigen:
- Fig. 1 ein Ausführungsbespiel einer erfindungsgemäßen Gruppenabferkelbucht mit zwei Abferkelbuchten und darin angeordneten Ferkelschutzeinrichtungen in einer perspektivischen Darstellung;
- Fig. 2 und Fig. 3 vergrößerte Ausschnitts-Darstellungen der erfindungsgemäßen Gruppenabferkelbucht gemäß Fig. 1 aus unterschiedlichen Perspektiven;
- Fig. 4 eine Gruppenabferkelbucht mit acht Abferkelbuchten in einer Draufsicht;
- Fig. 5 ein alternatives Ausführungsbeispiel einer Abferkelbucht in einer Draufsicht; und
- Fig. 6 einen Bereich der Abferkelbucht gemäß Fig. 5 in einer perspektivischen Darstellung.

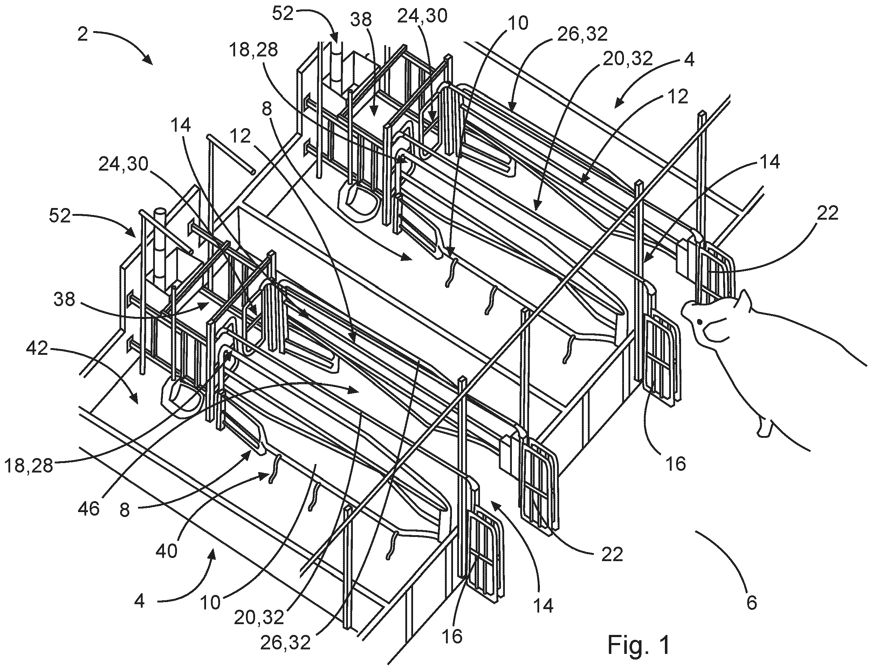

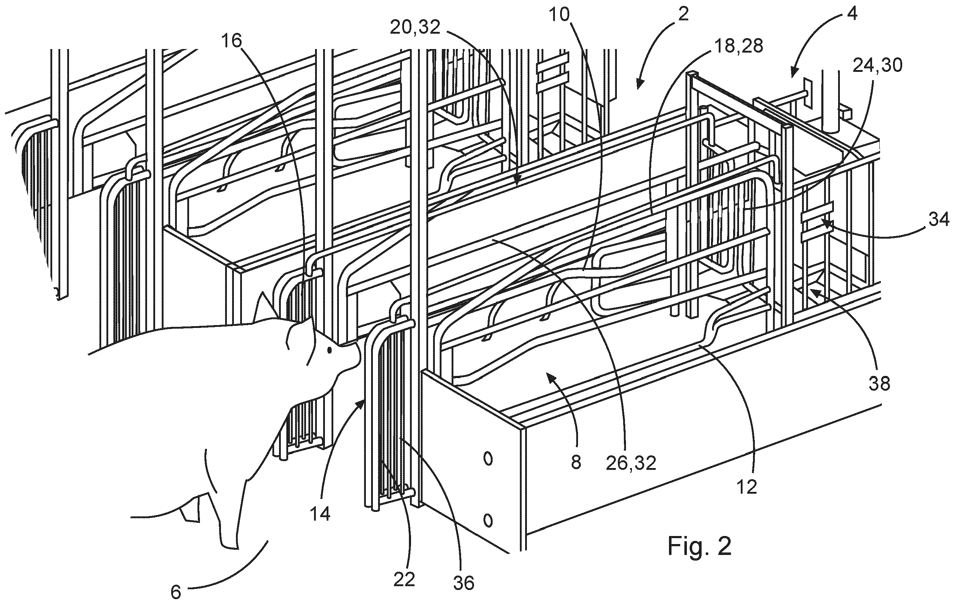

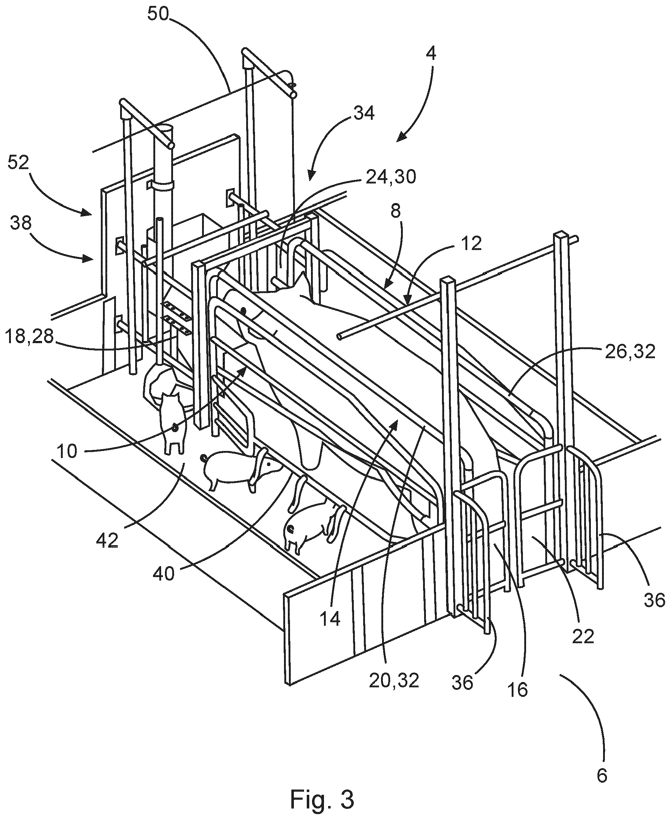

Die Figuren 1 bis 3 zeigen eine Gruppenabferkelbucht 2. In der Darstellung gemäß den Figuren 1 bis 3 weist die Gruppenabferkelbucht 2 zwei benachbart zueinander angeordnete Abferkelbuchten 4 auf. Benachbart zu den Abferkelbuchten 4 ist ein Bewegungsraum 6 angeordnet. Die Abferkelbucht 4 weist eine rechteckige Einfassung auf. Die Einfassung ist durch rückseitige Türelemente 16, 22 einer Ferkelschutzeinrichtung 8 unterbrochen. Ein Zugang zu der Abferkelbucht 4 von dem Bewegungsraum 6 wird über die rückseitigen Türelemente 16, 22 der Ferkelschutzeinrichtung 8 bereitgestellt (wie in den Figuren 1 und 2 gezeigt) oder versperrt (wie beispielsweise in Fig. 3 gezeigt).

Die Ferkelschutzeinrichtung 8 weist ein erstes Seitenteil 10 und ein zweites Seitenteil 12 auf. Das erste Seitenteil 10 ist im Wesentlichen parallel zu dem zweiten Seitenteil 12 angeordnet und von diesem derart beabstandet, dass das erste und das zweite Seitenteil 10, 12 einen Aufnahmeraum für eine Sau seitlich begrenzen. Die rückseitigen Türelemente 16, 22 sind in eine geschlossene Stellung und in eine offene Stellung bewegbar. In der geschlossenen Stellung begrenzen die Rückseitigen Türelemente 16, 22 den Aufnahmeraum 14 rückseitig. In der offenen Stellung geben die rückseitigen Türelemente 16, 22 einen rückseitigen Zugang zur dem Aufnahmeraum 14 frei.

Die Ferkelschutzeinrichtung 8 weist ein Betätigungselement 18 auf. Das Betätigungselement 18 ist dazu eingerichtet, von einer in den Aufnahmeraum 14 eintretenden Sau in eine offene Stellung gebracht zu werden, wie in Fig. 3 dargestellt ist. Das Betätigungselement 18 ist mittels einer Kopplungseinrichtung 20 mit dem rückseitigen Türelement 16 gekoppelt. Die Kopplung ist derart ausgebildet, dass eine Bewegung des Betätigungselements 18 eine Bewegung des rückseitigen Türelements 16 bewirkt und umgekehrt. Dabei korrespondiert die offene Stellung des rückseitigen Türelements 16 mit der geschlossenen Stellung des Betätigungselements 18 und die geschlossene Stellung des rückseitigen Türelements 16 mit der offenen Stellung des Betätigungselements 18. Das zweite rückseitige Türelement 22 ist benachbart zu dem ersten rückseitigen Türelement 16 angeordnet und ist ebenfalls in eine geschlossene Stellung und in eine offene Stellung bewegbar.

Das erste und das zweite rückseitige Türelement 16, 22 begrenzen in der geschlossenen Stellung den Aufnahmeraum 14 gemeinsam rückseitig und geben in der offenen Stellung den rückseitigen Zugang zu dem Aufnahmeraum 14 frei. Die Ferkelschutzeinrichtung 8 weist ein zweites Betätigungselement 24 auf. Es ist ebenfalls dazu eingerichtet, von einer in den Aufnahmeraum 14 eintretenden Sau in eine offene Stellung gebracht zu werden. Das zweite Betätigungselement 24 ist mittels einer zweiten Kopplungseinrichtung 26 derart mit dem zweiten rückseitigen Türelement 22 gekoppelt, dass eine Bewegung des zweiten Betätigungselements 24 eine Bewegung des zweiten rückseitigen Türelements 22 bewirkt und umgekehrt. Die Kopplung ist derart ausgebildet, dass die offene Stellung des zweiten rückseitigen Türelements 22 mit der geschlossenen Stellung des zweiten Betätigungselements 24 korrespondiert und die geschlossene Stellung des zweiten rückseitigen Türelements 22 mit der offenen Stellung des zweiten Betätigungselements 24 korrespondiert.

Das zweite Betätigungselement 24 ist benachbart zu dem ersten Betätigungselement 18 angeordnet. Insbesondere ist das erste Betätigungselement 18 als erstes Betätigungs-Türelement 28 ausgebildet. Das erste Betätigungs-Türelement 28 verläuft in der offenen Stellung im Wesentlichen parallel zu dem ersten Seitenteil 10 und in einer geschlossenen Stellung insbesondere im Wesentlichen rechtwinklig zu dem ersten Seitenteil 10. Die offene Stellung des ersten Betätigungs-Türelements 28 ist in den Figuren 1 und 2 gezeigt, die geschlossene Stellung in Fig. 3.

Darüber hinaus ist auch das zweite Betätigungselement 24 als zweites Betätigungs-Türelement 30 ausgebildet. Das zweite Betätigungs-Türelement 30 verläuft in der offenen Stellung (vgl. Fig. 3) im Wesentlichen parallel zu dem zweiten Seitenteil 12 und in einer geschlossenen Stellung (vgl. Figuren 1 und 2) insbesondere im Wesentlichen rechtwinklig zu dem zweiten Seitenteil 12. In der geschlossenen Stellung ragen das erste Betätigungs-Türelement 28 und das zweite Betätigungs-Türelement 30 in den Aufnahmeraum 14 hinein. Die erste Kopplungseinrichtung 20 und die zweite Kopplungseinrichtung 26 weisen jeweils ein Verbindungselement 32 auf, welche das jeweilige Betätigungs-Türelement 28, 30 mit dem jeweiligen rückseitigen Türelement 16, 22 verbindet.

Die Ferkelschutzeinrichtung 8 weist ferner eine Verriegelungseinrichtung 34 auf, welche in den Figuren 2 und 3 erkennbar ist. Die Verriegelungseinrichtung 34 ist in eine Bewegungsstellung und in eine Fangstellung bringbar. Die Verriegelungseinrichtung 34 verriegelt die rückseitigen Türelemente 16, 22 in der Fangstellung nach dem Eintreten einer Sau in den Aufnahmeraum 14. In der Bewegungsstellung können die rückseitigen Türelemente 16, 22 durch die im Aufnahmeraum 14 befindliche Sau selbsttätig geöffnet werden. Die rückseitigen Türelemente 16, 22 erstrecken sich in der offenen Stellung in Richtung des benachbart zu der Ferkelschutzeinrichtung 8 angeordneten Bewegungsraums 6. Benachbart zu der offenen Stellung der jeweiligen rückseitigen Türelemente 16, 22 ist jeweils eine Schutzvorrichtung 36 ausgebildet, die insbesondere als Schutzbügel ausgebildet ist. Hierdurch wird verhindert, dass Sauen, die sich in dem Bewegungsraum 6 befinden, die rückseitigen Türelemente 16, 22 ungewollt verschließen.

Das erste Seitenteil 10 und das zweite Seitenteil 12 sind ortsfest angeordnet. Die rückseitigen Türelemente 16, 22 sind unmittelbar angrenzend an die Seitenteile 10, 12 angeordnet oder mit diesen direkt verbunden. Die Ferkelschutzeinrichtung 8 weist ferner an einer den rückseitigen Türelementen 16, 22 gegenüberliegenden Stirnseite 56 eine Trogkonsole 38 auf. Die Betätigungs-Türelemente 28, 30 sind benachbart zu der Trogkonsole 38 derart angeordnet, dass eine Sau die Betätigungs-Türelemente 28, 30, insbesondere mit einem Schulterbereich der Sau, in die offene Stellung bewegt, wenn sich die Sau innerhalb des Aufnahmeraums 14 der Trogkonsole 38 annähert. Das erste Seitenteil 10 und das zweite Seitenteil 12 sind als gitterförmige Seitenteile 10, 12 ausgebildet. Darüber hinaus weisen das erste Seitenteil 10 und das zweite Seitenteil 12 einen Ferkelabweiser 40 auf. Benachbart zu den Seitenteilen 10, 12 der Ferkelschutzeinrichtung 8 ist jeweils ein Ferkel-Bewegungsraum 42, 46 ausgebildet, der nach Art eines Ferkelnestes ausgestaltet ist. Wie insbesondere in den Figuren 2 und 3 gezeigt ist, sind die Verriegelungseinrichtungen 34 der beiden Abferkelbuchten 4 über ein gemeinsames Betätigungsmittel 50 betätigbar. Auf diese Weise können beispielsweise beide Ferkelschutzeinrichtungen 8 gemeinsam durch ein einziges Betätigungsmittel 50 in die Fangstellung oder die Bewegungsstellung gebracht werden.

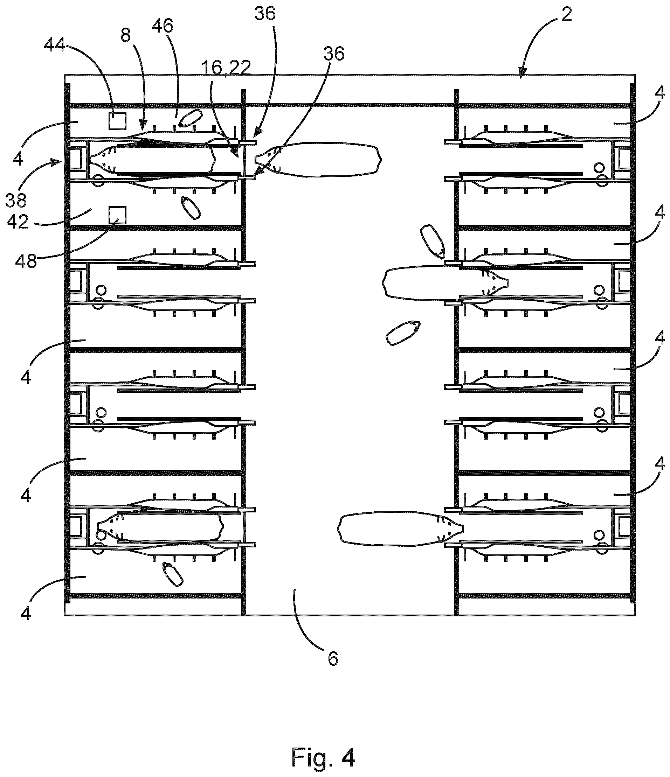

Fig. 4 zeigt eine Draufsicht auf eine Gruppenabferkelbucht 2. Die Gruppenabferkelbucht 2 weist insgesamt acht Abferkelbuchten 4 auf, von denen jeweils vier Abferkelbuchten 4 benachbart zueinander angeordnet sind. Zwischen den jeweils vier benachbart angeordneten Abferkelbuchten 4 ist ein Bewegungsraum 6 vorgesehen, der von sämtlichen Abferkelbuchten 4 zugänglich ist. Jede der Abferkelbuchten 4 weist eine unter Bezugnahme auf die Figuren 1 bis 3 beschriebene Ferkelschutzeinrichtung 8 auf.

Wie anhand der oben links dargestellten Abferkelbucht 4 erkennbar ist, weist die Abferkelbucht 4 beidseits der Ferkelschutzeinrichtung 8 Ferkel-Bewegungsräume 42, 46 auf. Exemplarisch dargestellt weist der erste Ferkel-Bewegungsraum 42 ein erstes Heizmittel 44 auf. Der zweite Ferkel-Bewegungsraum 46 weist ein zweites Heizmittel 48 auf. Wenn mittels der Heizmittel 44, 48 der erste Ferkel-Bewegungsraum 42 auf eine von der Temperatur des zweiten Ferkel-Bewegungsraums 46 abweichende Temperatur aufgeheizt wird, lassen sich zwei Klimazonen gestalten, sodass die Ferkel ihre Wohlfühlzone wählen können.

Wie aus Fig. 4 ebenfalls anhand der oben links dargestellten Abferkelbucht erkennbar ist, hat das Eintreten der Sau in die Ferkelschutzeinrichtung 8 bewirkt, dass die rückseitigen Türelemente 16, 22 verschlossen sind, wodurch eine Störung durch die sich unmittelbar angrenzend an die Abferkelbucht 4 aufhaltende im oberen Bereich dargestellte zweite Sau vermieden wird. Die Schutzvorrichtungen 36, die insbesondere als Bügel ausgebildet sind, verhindern bei geöffneten rückseitigen Türelementen 16, 22 ein ungewolltes bzw. versehentliches Verschließen derselben durch Kontakt mit einer sich im Bewegungsraum 6 befindlichen Sau.

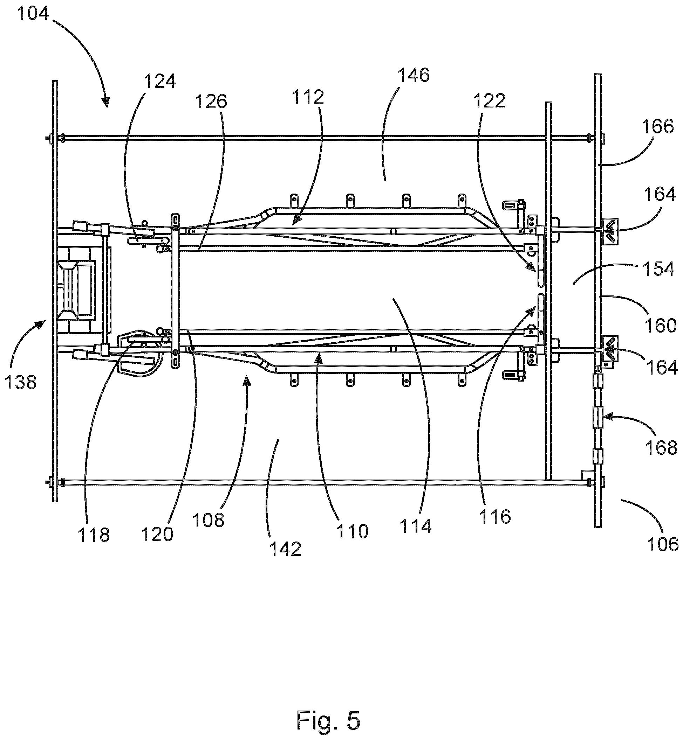

Fig. 5 zeigt ein alternatives Ausführungsbeispiel einer Abferkelbucht 104. Die Abferkelbucht 104 ist benachbart zu einem Bewegungsraum 106 angeordnet. Die Abferkelbucht 104 weist eine Ferkelschutzeinrichtung 108 auf. Die Ferkelschutzeinrichtung 108 weist ein erstes Seitenteil 110, ein zweites Seitenteil 112 sowie rückseitige Türelemente 116, 122 auf, die einen Aufnahmeraum 114 für eine Sau (nicht gezeigt) definieren. Die rückseitigen Türelemente 116, 122 sind, wie bereits in Bezug auf die Figuren 1 bis 4 beschrieben, über Kopplungseinrichtungen 120, 126 mit Betätigungselementen 118, 124 derart gekoppelt, dass eine in die Ferkelschutzeinrichtung 108 eintretende Sau durch Betätigung der Betätigungselemente 118, 124 die rückseitigen Türelemente 116, 122 schließt. Benachbart zu den Betätigungselementen 118, 124 ist eine Druckkonsole 138 angeordnet. Seitlich benachbart zu der Ferkelschutzeinrichtung 108 befinden sich ein erster Ferkel-Bewegungsraum 142 und ein zweiter Ferkel-Bewegungsraum 146. Hinter der Ferkelschutzeinrichtung 108 ist ferner ein hinterer Ferkel-Bewegungsraum 154 ausgebildet.

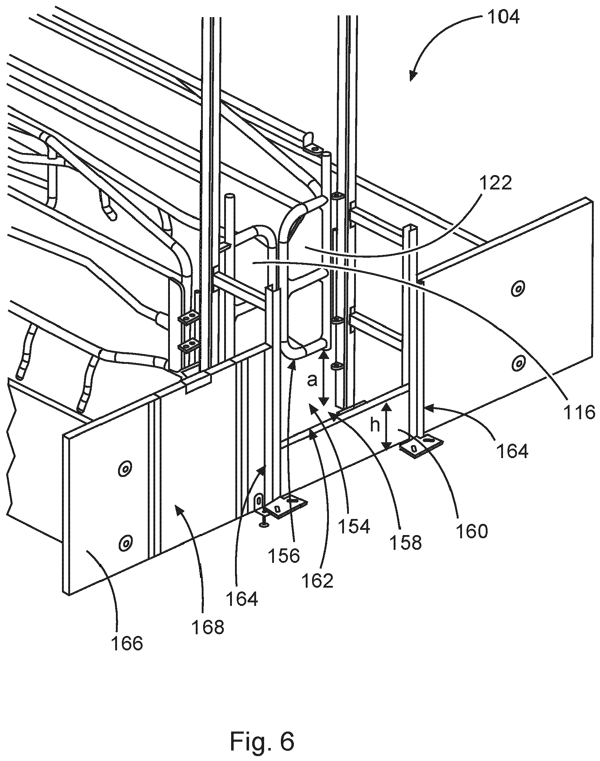

Wie insbesondere auch unter Bezugnahme auf Fig. 6 erkennbar ist, sind die Unterseiten 156 der rückseitigen Türelement 116, 122 von einem Boden 158 der Abferkelbucht 104 derart beabstandet, dass die Sau sicher in der Ferkelschutzeinrichtung 108 gehalten wird und Ferkel unterhalb der rückseitigen Türelemente 116, 122 in den hinteren Ferkel-Bewegungsraum 154 wechseln können. Die rückseitigen Türelemente 116, 122 erstrecken sich in der offenen Stellung in den hinteren Ferkel-Bewegungsraum 154 hinein. Der hintere Ferkel-Bewegungsraum 154 ist mit dem ersten Ferkel-Bewegungsraum 142 und dem zweiten Ferkel-Bewegungsraum 146 derart verbunden, dass Ferkel aus dem hinteren Ferkel-Bewegungsraum 154 in die ersten und zweiten Ferkel-Bewegungsräume 142, 146 und umgekehrt wechseln können.

Die Unterseiten 156 der rückseitigen Türelemente 116, 122 sind vom Boden 158 der Abferkelbucht 104 in einer Vertikalrichtung 15 bis 20 cm beabstandet. Zwischen dem hinteren Ferkel-Bewegungsraum 154 und einem an die Abferkelbucht 104 angrenzenden Bewegungsraum 106 ist ein Trennelement 160 angeordnet. Das Trennelement 160 ist so dimensioniert, dass die Sau das Trennelement 160 übersteigen kann und die Ferkel innerhalb der Abferkelbucht 104 gehalten werden. Optional kann das Trennelement 160 durch ein Trennelement größerer Höhe ersetzt werden, sodass die Abferkelbucht 104 gegenüber Tieren, die sich im Bewegungsraum 106 befinden, abgeschirmt wird. Ein solches Trennelement größerer Höhe kann vollständig entfernt werden, wenn die Sau die Abferkelbucht 104 verlassen soll. Auch die Ferkel können sodann in den Bewegungsraum 106 wechseln. Das Trennelement 160 weist eine Höhe h von 15 cm bis 20 cm auf. Das Trennelement 160 ist in seiner Oberseite 162 abgerundet ausgebildet, wobei insbesondere ein Rohr (nicht dargestellt) oberseitig an dem Trennelement 160 angeordnet ist. Das Trennelement 160 ist in einer Vertikalführung 164 austauschbar aufgenommen.

Die Einfassung 166 der Abferkelbucht 104 weist benachbart zu dem Bewegungsraum 106 ein Türelement 168 auf, insbesondere einen Ferkelschlupf 168, wobei der Ferkelschlupf 168 in einem geöffneten Zustand, welcher insbesondere durch ein Anheben des Ferkelschlupfes 168 bzw. Führen des Ferkelschlupfes 168 nach oben erreicht wird, einen Übergang der Ferkel aus der Abferkelbucht 104 in einen benachbarten Bewegungsraum 106 ermöglicht.

### Bezugszeichenliste

- 2: Gruppenabferkelbucht
- 4: Abferkelbucht
- 6: Bewegungsraum
- 8: Ferkelschutzeinrichtung
- 10: erstes Seitenteil
- 12: zweites Seitenteil
- 14: Aufnahmeraum
- 16: (erstes) rückseitiges Türelement
- 18: (erstes) Betätigungselement
- 20: (erste) Kopplungseinrichtung
- 22: zweites rückseitiges Türelement
- 24: zweites Betätigungselement
- 26: zweite Kopplungseinrichtung
- 28: erstes Betätigungs-Türelement
- 30: zweites Betätigungs-Türelement
- 32: Verbindungselement
- 34: Verriegelungseinrichtung
- 36: Schutzvorrichtung, insbesondere Schutzbügel
- 38: Trogkonsole
- 40: Ferkelabweiser
- 42: (erster) Ferkel-Bewegungsraum
- 44: erstes Heizmittel
- 46: zweiter Ferkel-Bewegungsraum
- 48: zweites Heizmittel
- 50: gemeinsames Betätigungsmittel
- 52: Stirnseite
- 104: Abferkelbucht
- 106: Bewegungsraum
- 108: Ferkelschutzeinrichtung
- 110: erstes Seitenteil
- 112: zweites Seitenteil
- 114: Aufnahmeraum
- 116: (erstes) rückseitiges Türelement
- 118: (erstes) Betätigungselement
- 120: (erste) Kopplungseinrichtung
- 122: zweites rückseitiges Türelement
- 124: zweites Betätigungselement
- 126: zweite Kopplungseinrichtung
- 138: Trogkonsole
- 142: (erster) Ferkel-Bewegungsraum
- 146: zweiter Ferkel-Bewegungsraum
- 154: hinterer Ferkel-Bewegungsraum
- 156: Unterseite eines rückseitigen Türelements
- 158: Boden der Abferkelbucht
- 160: Trennelement
- 162: Oberseite des Trennelements
- 164: Vertikalführung für das Trennelement
- 166: Einfassung der Abferkelbucht
- 168: Ferkelschlupf (Türelement)
- h: Höhe des Trennelements
- a: Abstand zwischen Boden und Unterseite eines rückseitigen Türelements

## Patentansprüche

1. Abferkelbucht (4) für eine Gruppenabferkelbucht mit einer in der Abferkelbucht angeordneten Ferkelschutzeinrichtung (8), wobei die Ferkelschutzeinrichtung (8) umfasst:
- ein erstes Seitenteil (10),
- ein zweites Seitenteil (12), welches im Wesentlichen parallel zu dem ersten Seitenteil (10) angeordnet und von diesem derart beabstandet ist, dass das erste und das zweite Seitenteil (10, 12) einen Aufnahmeraum (14) für eine Sau seitlich begrenzen,
- ein in eine geschlossene Stellung und in eine offene Stellung bewegbares rückseitiges Türelement (16, 22), welches in der geschlossenen Stellung den Aufnahmeraum (14) rückseitig begrenzt und in der offenen Stellung einen rückseitigen Zugang zu dem Aufnahmeraum (14) freigibt,
**dadurch gekennzeichnet, dass** die Abferkelbucht (4) dazu eingerichtet ist, dass die Sau den Aufnahmeraum (14) der Ferkelschutzeinrichtung (8) selbsttätig betreten und/oder verlassen kann, wobei das rückseitige Türelement (16, 22) durch die Sau in die geschlossene Stellung überführt wird, wenn die Sau die Ferkelschutzeinrichtung (8) betreten hat.

2. Abferkelbucht (4) nach Anspruch 1,
wobei sich das rückseitige Türelement (16, 22) in der offenen Stellung in Richtung eines benachbart zu der Ferkelschutzeinrichtung (8) angeordneten Bewegungsraums (6) erstreckt,
und wobei benachbart zur offenen Stellung des rückseitigen Türelements (16, 22) eine Schutzvorrichtung (36), insbesondere ein Schutzbügel, angeordnet ist.

3. Abferkelbucht (4) nach Anspruch 1 oder 2,
ferner umfassend eine Verriegelungseinrichtung (34), welche in eine Bewegungsstellung und in eine Fangstellung bringbar ist, wobei die Verriegelungseinrichtung (34) das rückseitige Türelement (16, 22) in der Fangstellung nach dem Eintreten einer Sau in den Aufnahmeraum (14) verriegelt, und das rückseitige Türelement (16, 22) in der Bewegungsstellung durch die im Aufnahmeraum (14) befindlich Sau geöffnet werden kann.

4. Abferkelbucht (4) nach einem der vorstehenden Ansprüche,
wobei benachbart zu wenigstens einem Seitenteil (10, 12) der Ferkelschutzeinrichtung (8), insbesondere benachbart zu beiden Seitenteilen (10, 12), ein Ferkel-Bewegungsraum (42, 46), insbesondere nach Art eines Ferkelnestes, ausgebildet ist.

5. Abferkelbucht (4) nach einem der vorstehenden Ansprüche,
wobei im Bereich des Aufnahmeraums (14) ein Betätigungselement (18) angeordnet ist, welches dazu eingerichtet ist, von einer in den Aufnahmeraum (14) eintretenden Sau aus einer geschlossenen Stellung in eine offene Stellung gebracht zu werden,
wobei das Betätigungselement (18) mittels einer Kopplungseinrichtung (20) derart mit dem rückseitigen Türelement (16, 22) gekoppelt ist, dass eine Bewegung des Betätigungselements (18) eine Bewegung des rückseitigen Türelements (16, 22) bewirkt und umgekehrt, wobei die Kopplung derart ausgebildet ist, dass die offene Stellung des rückseitigen Türelements (16, 22) mit einer geschlossenen Stellung des Betätigungselements (18) korrespondiert und die geschlossene Stellung des rückseitigen Türelements (16, 22) mit der offenen Stellung des Betätigungselements (18) korrespondiert.

6. Abferkelbucht (4) nach Anspruch 5,
wobei das rückseitige Türelement (16) ein erstes rückseitiges Türelement (16) ist und wobei die Ferkelschutzeinrichtung (8) ein zweites rückseitiges Türelement (22) aufweist, welches benachbart zu dem ersten rückseitigen Türelement (16) angeordnet ist und in eine geschlossene Stellung und in eine offene Stellung bewegbar ist,
wobei das erste und das zweite rückseitige Türelement (16, 22) in der geschlossenen Stellung den Aufnahmeraum (14) gemeinsam rückseitig begrenzen und in der offenen Stellung den rückseitigen Zugang zu dem Aufnahmeraum (14) freigeben,
und wobei das Betätigungselement (18) ein erstes Betätigungselement (18) ist und die Ferkelschutzeinrichtung (8) ein im Bereich des Aufnahmeraums (14) angeordnetes zweites Betätigungselement (24) aufweist, welches ebenfalls dazu eingerichtet ist, von einer in den Aufnahmeraum (14) eintretenden Sau aus einer geschlossenen Stellung in eine offene Stellung gebracht zu werden,
wobei das zweite Betätigungselement (24) mittels einer zweiten Kopplungseinrichtung (26) derart mit dem zweiten rückseitigen Türelement (22) gekoppelt ist, dass eine Bewegung des zweiten Betätigungselements (24) eine Bewegung des zweiten rückseitigen Türelements (22) bewirkt und umgekehrt, wobei die Kopplung derart ausgebildet ist, dass die offene Stellung des zweiten rückseitiges Türelements (22) mit der geschlossenen Stellung des zweiten Betätigungselements (24) korrespondiert und die geschlossene Stellung des zweiten rückseitigen Türelements (22) mit der offenen Stellung des zweiten Betätigungselements (24) korrespondiert, insbesondere wobei das zweite Betätigungselement (24) benachbart zu dem ersten Betätigungselement (18) angeordnet ist.

7. Abferkelbucht (4) nach einem der vorstehenden Ansprüche,
wobei das erste Betätigungselement (18) als erstes Betätigungs-Türelement (28) ausgebildet ist, welches in einer offenen Stellung im Wesentlichen parallel zu dem ersten Seitenteil (10) verläuft und in einer geschlossenen Stellung im Wesentlichen rechtwinklig zu dem ersten Seitenteil (10) in den Aufnahmeraum (14) hineinragt und/oder wobei das zweite Betätigungselement (24) als zweites Betätigungs-Türelement (30) ausgebildet ist, welches in einer offenen Stellung im Wesentlichen parallel zu dem zweiten Seitenteil (12) verläuft und in einer geschlossenen Stellung im Wesentlichen rechtwinklig zu dem zweiten Seitenteil (12) in den Aufnahmeraum (14) hineinragt.

8. Abferkelbucht (4) nach einem der vorstehenden Ansprüche,
wobei die erste Kopplungseinrichtung (20) und/oder die zweite Kopplungseinrichtung (26) ein Verbindungselement (32) aufweist, welches das Betätigungs-Türelement (28, 30) mit dem rückseitigen Türelement (16, 22) verbindet, und/oder
wobei die Abferkelbucht (4) eine, insbesondere rechteckige, Einfassung aufweist, welche durch das wenigstens eine rückseitige Türelement (16, 22) der Ferkelschutzeinrichtung (8) unterbrochen ist, und wobei ein Zugang zu der Abferkelbucht (4) über das wenigstens eine rückseitige Türelement (16, 22) der Ferkelschutzeinrichtung (8) bereitgestellt oder versperrt wird.

9. Abferkelbucht (104) nach einem der Ansprüche 3 bis 8,
wobei hinter der Ferkelschutzeinrichtung (108) ein hinterer Ferkel-Bewegungsraum (154) ausgebildet ist,
und wobei Unterseiten (156) der rückseitigen Türelemente (116, 122) von einem Boden (158) der Abferkelbucht (104) derart beabstandet sind, dass die Sau sicher in der Ferkelschutzeinrichtung (108) gehalten wird und Ferkel unterhalb der rückseitigen Türelemente (116, 122) in den hinteren Ferkel-Bewegungsraum (154) wechseln können.

10. Abferkelbucht (104) nach dem vorhergehenden Anspruch,
wobei sich die rückseitigen Türelemente (116, 122) in der offenen Stellung in den hinteren Ferkel-Bewegungsraum (154) erstrecken und/oder wobei der hintere Ferkel-Bewegungsraum (154) mit dem ersten Ferkel-Bewegungsraum (142) und dem zweiten Ferkel-Bewegungsraum (146) derart verbunden ist, dass Ferkel aus dem hinteren Ferkel-Bewegungsraum (154) in die ersten und zweiten Ferkel-Bewegungsräume (142, 146) und umgekehrt wechseln können,
wobei vorzugsweise die Unterseiten (156) der rückseitigen Türelemente (116, 122) vom Boden (158) der Abferkelbucht (104) in einer Vertikalrichtung einen Abstand (a) von 15 cm bis 20 cm aufweisen.

11. Abferkelbucht (104) nach dem vorhergehenden Anspruch,
wobei zwischen dem hinteren Ferkel-Bewegungsraum (154) und einem an die Abferkelbucht (104) angrenzenden Bewegungsraum (106) ein Trennelement (160) angeordnet ist, welches so dimensioniert ist, dass die Sau das Trennelement (160) übersteigen kann und die Ferkel innerhalb der Abferkelbucht (104) gehalten werden,
wobei vorzugsweise das Trennelement (160) eine Höhe (h) von 15 cm bis 20 cm aufweist und/oder wobei das Trennelement (160) an seiner Oberseite (162) abgerundet ausgebildet ist, insbesondere wobei ein Rohr oberseitig an dem Trennelement (160) angeordnet ist, und/oder
wobei vorzugsweise das Trennelement (160) in einer Vertikalführung (164) austauschbar aufgenommen ist.

12. Abferkelbucht (104) nach einem der vorstehenden Ansprüche,
wobei in der Einfassung (166) der Abferkelbucht (104) benachbart zu dem Bewegungsraum (106) ein Türelement (168), insbesondere ein Ferkelschlupf (168), angeordnet ist, welches in einem geöffneten Zustand einen Übergang der Ferkel aus der Abferkelbucht (104) in einen benachbarten Bewegungsraum (106) ermöglicht, und/oder
wobei das erste und das zweite Seitenteil (10, 12) ortsfest angeordnet sind.

13. Abferkelbucht (4) nach einem der Ansprüche 7-12,
wobei die Ferkelschutzeinrichtung (8) an einer dem rückseitigen Türelement (16, 22) gegenüberliegenden Stirnseite (56) eine Trogkonsole (38) aufweist, wobei die Betätigungs-Türelemente (28, 30) benachbart zu der Trogkonsole (38) derart angeordnet sind, dass eine Sau die Betätigungs-Türelemente (28, 30), insbesondere mit einem Schulterbereich der Sau, in die offene Stellung bewegt, wenn sich die Sau der Trogkonsole (38) annähert, und/oder
wobei das erste Seitenteil (10) und/oder das zweite Seitenteil (12) als gitterförmiges Seitenteil (10, 12) ausgebildet ist, und/oder
wobei das erste und/oder das zweite Seitenteil (10, 12) einen Ferkelabweiser (40) aufweist.

14. Abferkelbucht (4) nach einem der vorstehenden Ansprüche,
wobei einem ersten Ferkel-Bewegungsraum (42) ein erstes Heizmittel (44) zugeordnet ist und einem zweiten Ferkel-Bewegungsraum (46) ein zweites Heizmittel (48) zugeordnet ist, wobei die Heizmittel (44, 48) derart ausgebildet und eingerichtet sind, dass diese die Ferkel-Bewegungsräume (42, 46) auf unterschiedliche Temperaturen erwärmen.

15. Gruppenabferkelbucht (2) mit wenigstens zwei benachbart zueinander angeordneten Abferkelbuchten (4) und einem benachbart zu den Abferkelbuchten (4) angeordneten Bewegungsraum (6), wobei wenigstens eine der Abferkelbuchten (4) nach einem der vorstehenden Ansprüche ausgebildet ist,
wobei vorzugsweise mehrere, insbesondere sämtliche der Abferkelbuchten (4) die Verriegelungseinrichtung (34) nach Anspruch 2 aufweisen und wobei vorzugsweise die Verriegelungseinrichtungen (34) über ein gemeinsames Betätigungsmittel (50) betätigbar sind.
